# EUROPEAN PATENT APPLICATION

(11) **EP 4 699 787 A1**
(43) Date of publication of application: **25.02.2026**
(21) Application number: 23794436.8
(22) Date of filing: 13.09.2023
(51) Int. Cl.: B29C 64/20, B29C 64/209, B29C 64/255, B29C 64/336, B33Y 30/00, B33Y 40/00, B22F 12/00

(54) **GRANULE-BASED THREE-DIMENSIONAL PRINTING EQUIPMENT**

(30) Priority: 14.09.2022 ES 202230800
(71) Applicant: Voxelcare, SL, 03202 Elche (ES)
(72) Inventor: LAMPERT, Michael, 03202 ELCHE (ES)
(74) Representative: Sanchez Quiles, Salvador Javier
(86) International application number: PCT/ES2023/070558
(87) International publication number: WO 2024/056928

(57) **Abstract**

Granule-based three-dimensional printing equipment, having a three-dimensional printer (1) comprising control software and an extruder head (2), with an extruder screw (3) for conveying the granules from a filling reservoir (5) to a nozzle (6); an inductive sensor (7) and a carriage (8) for moving the extruder head (2); further comprising an automatic granule dispenser (9) for dispensing granules into the filing reservoir (5), which comprises, in turn, two or more containers (10) each of which contains a type of granule; a supporting base (11) for supporting the containers, including an engagement area (12) with a first outlet hole (13); movable attachment means on each container (10); and a device for supplying granules to the filling reservoir (5), comprising a conveyor screw (14) from the first hole (13) to a second hole (15) positioned eccentrically and at a lower height, and a second motor (16).

## Description

### Technical Field of the Invention

This invention relates to the technical field of three-dimensional printing machines and devices, in particular those using thermoplastic material granules, also known as pellets, for said printing.

### Background of the Invention

Early on, the three-dimensional extrusion printing processes were mainly carried out by means of fused deposition modeling (FDM) technology with filaments, having three main elements: a printing plate or bed on which the piece is printed, a filament spool serving as printing material, and an extrusion head. In this technology, the filament is drawn and fused by the extruder of the 3D printer, depositing the material precisely layer by layer on the printing bed.

However, three-dimensional printers are currently being developed adapted to be able to print with granules, as they are materials that help to save costs and allow for a greater material variety than in the case of the filaments. It is a faster and more versatile system than filament printing, so that, nowadays, the reality is that three-dimensional printing by means of granules is increasingly popular.

The granules, also known as pellets, may be small balls which manufacturers use to sell plastic wholesale, and filaments, for example, are manufactured therefrom. Thus, printers that directly use the granules manage to skip an intermediate step of the process, and that entails an important reduction in the cost.

This type of granule-based three-dimensional printer has a granule extruder consisting in a component combining a granule-melting device and a biasing mechanism in one single element, such that it replaces the extruder-melting device assembly of the filament printers, and said granule extruder reduces the need for these two elements.

With the development of this three-dimensional printing system, products of greater quality and a wider range of characteristics are increasingly demanded, so that the use of more than one type of material, of different composition, or different color..., is increasingly common, allowing for greater variability in the products obtained. Thereby, it is possible to obtain various product designs, as well as a variability in the material properties forming them, contributing more or less strength, hardness, flexibility... depending on the corresponding area of the product.

Reference documents ES2779448 and US2016347000 may be mentioned as an example of the state of the art.

Reference document ES2779448 discusses a three-dimensional printing system comprising a printing head arranged vertically on a construction platform, and presenting a variable- width nozzle with a rectangular opening to directly extrude granules through said nozzle to provide a vertical fused tape on top of the construction platform. These granules comprise at least one polymer.

In addition, the extrusion means have means for moving said printing head and a heated chamber before said nozzle. It also has an actively-controlled hatch that, in turn, controls the aperture of the nozzle in one dimension, while the other dimension remains fixed, and wherein said variable-width nozzle is axially-rotational.

In this printing system, the extruding means entail the conveyance of granules by blowing through a flexible tube from a supply container to the moving printing head through a small hopper that feeds the granules through gravity, or the heated chamber is distal from said moving printing head and the granules are fused therein and the resulting fused mass is fed to said moving printing head through a heat-resistant flexible tube provided with a flexible heated sleeve.

In any of the cases, a feeding or metering of the extrusion head is under consideration which is limited to a single type of granule present in a reservoir which usually has large capacity.

The need to frequently change the type of printing material is not contemplated, which would pose a problem in this case, as the reservoir would have to be emptied each time a change is required, to introduce materials of different characteristics. In addition, it must be taken into account that no residual granules remain in the connection between the reservoir and the extruder, since that would alter the desired process of change of material. In these printers, in order to clean or eliminate these remains, it would be necessary to detach said reservoir from the extruder.

This also poses a problem when breakdowns occur or for maintenance, since a disassembly is required, which takes time and a reduction of the printer productivity.

Likewise, these printers have the extruder head attached to the movable carriage, which allows them to vary their position during the printing process, but in case maintenance or repair of said head is necessary, it again becomes imperative to disassemble this part of the printer, which generates new downtime to the machine.

Reference document US2016347000 defines a user device and a fused deposition manufacturing method of an object. This device presents a conveyor screw of a plurality of solid thermoplastic granules from a hopper to a cylinder and, a heating element coupled to said cylinder, fusing the solid thermoplastic granules therein, thus producing a thermoplastic liquid.

The thermoplastic liquid is extruded through a nozzle covering an end of the cylinder, the extruded thermoplastic liquid later solidifying to conform the object. A computerized control system controls both the thermoplastic liquid flow rate, adjusting the rotation of a motor coupled to the conveyor screw, and the position of the nozzle above the construction surface according to the three-dimensional shape of the object. The device and the method are especially suitable for the mass production of customized shoes and other objects, wherein the thermoplastic material may be easily combined with customized dyes and blowing agents.

This device comprises, once again, a single hopper for the containment of the printing material, i.e. the granules or thermoplastic granules. However, the option is certainly considered that it be necessary to use a different thermoplastic material on the printing surface. In this case, this option is solved by the presence of a second extruder head that sees to the deposition of the second thermoplastic liquid, which is different from the first one, for the combination of both in the manufacture of the product.

Although it is a way of providing a solution to the posed problem, this mode of solving it poses new disadvantages, since the existence of two extruder heads above the printing surface or bed is not convenient or efficient, for, on the one hand, both heads are going to mutually interfere and may collide with each other, while on the other hand, the product being printed is a three-dimensional product and, as such, has a set volume and a shape that does not have to be flat, which also entails the possibility of a second extruder head interfering in its path with the piece manufactured by a first head.

On the other hand, this solution once again limits the number of different materials which can be used, in this case to a number of two, and does not solve the problem for the case where the use of three or more types of materials are necessary, since the option to add new extrusion heads entails increasingly raising the cost of the printer, as well operational problems, as the more heads above the printing bed there are, the higher the likelihood of collision with each other and with the product being printed.

Therefore, it is necessary to find a solution to these posed problems, in order to carry out in an efficient and safe manner printing jobs that will allow a wide variability of material types used, whether it be for design-related or product property reasons, as well as increase the productivity of these printers by means of enhancements in certain aspects of their operation.

### Description of the Invention

The granule-based three-dimensional printing equipment, the granules being thermoplastic material granules presented herein, is formed by a printer executing control software and comprising a granule extruder head.

The control software may be executed by a controller device embedded in the printer, for example a programmable logic controller, a computer or the like.

In turn, said extruder head comprises an extruder screw connected to a first motor controlled by the control software, configured to convey the granules from a granule filling reservoir to an outlet nozzle.

It further comprises an inductive sensor connected to the control software and attached to the extruder head in a first position adjacent to the nozzle and at a first height equal to or considerably higher than the height of the nozzle, and a movable carriage of the extruder head, configured to move the extruder head, connected to the software. The movement of the extruder head, in coordination with the extrusion of the material through the nozzle by the control software, allows depositing the thermoplastic material resulting from the fusion of the granules following a preset pattern, thereby obtaining a three-dimensional printed object.

The equipment presented herein further comprises an automatic granule dispenser for the feeding of the filling reservoir included in the extruder head, allowing for its refilling or alternating between different types of granules.

This automatic dispenser comprises two or more containers, each for containing a type of granule, for example granules of different material or color, a supporting base of said containers, movable attachment means on each one of the containers relative to the supporting base, and a device for supplying granules to the filling reservoir of the extruder, for each container, respectively.

The supporting base has an engagement area for each of the containers, where a first hole is provided for the outflow of the granules of the corresponding container.

In addition, the granule-supplying device comprises a granule conveyor screw from the first hole to the second outlet hole located at a lower height to that of the first hole and eccentric relative thereto, and at a greater height than the filling reservoir of the extruder head, allowing for dumping granules from the containers inside the filling reservoir. Each conveyor screw is connected to a second motor connected to the control software, which allows controlling when and how many granules are transferred from the containers to the filling reservoir of the extruder head.

Therefore, the supporting base is attached to the printer at a height such that said second outlet holes are located above the filling reservoir of the head.

When the refilling of granules of the filling reservoir of the extruder head is required, the control software may be configured to move said filling reservoir until it is located beneath the second outlet hole of the corresponding granule-supplying device.

With the granule-based three-dimensional printing equipment proposed herein a significant improvement of the state of the art is obtained.

This is because an equipment is provided that solves the existing shortcomings in the state of the art, since it comprises a granule dispenser that, by itself, is capable of transferring the raw material, that is, the granules or thermoplastic granules, to carry out the three-dimensional printing from a container, so that it will be dumped in a controlled manner through a hole.

This dispenser has two or more containers, each of which allows the containment of a different type of granule, such that, based on the specific needs of the product to be developed and by means of the commands sent by the software, the equipment may meter granules of one type or another, without distinction, each of them according to the needs of the product being manufactured.

A fully automatic metering of granules to the extrusion head is achieved, which is only carried out when it is required, that is, at the start of the printing job, when the equipment software detects that there are no longer granules in the reservoir of the extrusion head and a refilling thereof must be carried out, or when it is necessary to carry out a refilling of granules of a different type to that that had been loaded previously.

Therefore, the containers are filled with a preset number of granules of different types and the software sends the commands of the moment in which each one of these types must be metered in the reservoir of the head. With this an increase in the efficiency and versatility of this printing equipment is achieved, thereby obtaining a wider variety of quality products in a rapid manner.

In addition, this equipment has certain variations in the printer of the equipment, ensuring that its joint operation with the dispenser will really be suitable and efficient.

Therefore, in order to carry out a change of granule type preventing contamination by the presence of leftovers of the previously used granule type, within the extrusion head, it is necessary to remove any remains thereof. To that end, this equipment comprises a granule presence sensor at the entrance of the extruder screw and movable connection means between the reservoir of the printer and said extruder screw.

This affords the advantage that if we choose the wrong granule type it is possible to empty the hopper by means of the movement of the reservoir relative to the extruder screw, which may be a full movement or through tilting or sliding and without the need to disassemble parts of the printer.

Therefore, the containers are also removable, so that the filling of the granules therein be easier, and the connection part on each container to the supporting base thereof has control means for the outflow of the granules, thus ensuring that no material loss occurs in the connection process of the containers.

And, in the same sense, the extruder head is also connected to the movable carriage thereof by means of movable attachment means, so that if any problem should arise in the head, it will easily be replaceable without having to stop the printing process other than for the time during which a head is replaced by another.

25 Thus, a three-dimensional printing equipment results with which a great efficiency and performance is achieved, allowing for a more versatile and varied production with a reduction in the production times.

### Brief Description of the Drawings

In order to further the understanding of the features of the invention, in accordance to a preferred example of a practical embodiment thereof, a series of drawings is provided as an integral part of said description, wherein, with illustrative and non-limiting character, the following has been depicted:
Figure 1.- Shows a perspective view of a granule-based three-dimensional printing equipment, in a preferred embodiment of the invention.
Figures 2.1, 2.2, and 2.3.- Show plan, elevational and profile views of a granule-based three- dimensional printing equipment, in a preferred embodiment of the invention.
Figures 3.1, and 3.2.- Show as many detailed views of the extruder head of a granule-based three-dimensional printing equipment, with the filling reservoir connected thereto and unconnected therefrom, respectively, in a preferred embodiment of the invention.
Figures 4.1, and 4.2.- Show as many detailed views of the extruder head of a three-dimensional equipment for granules, with the inductive sensor in a first and second position, respectively, in a preferred embodiment of the invention.
Figure 5.- Shows a detailed view of the connection part and the engagement area on each container of a granule-based three-dimensional printing equipment, in a preferred embodiment of the invention.
Figures 6.1, and 6.2.- Show as many bottom perspective views of the connection part of a granule-based three-dimensional printing equipment, in closed and open positions of the hatch, respectively, in a preferred embodiment of the invention.
Figure 7.- Shows an exploded view of the connection part and of the control means of the outflow of granules from a granule-based three-dimensional printing equipment, in a preferred embodiment of the invention.
Figures 8.1, and 8.2.- Show as many sectional views of the connection part through a transverse plane to the tab, of a granule-based three-dimensional printing equipment, in closed and open positions of the hatch, respectively, in a preferred embodiment of the invention.
Figure 9.- Shows a sectional view of the dispenser of a granule-based three-dimensional printing equipment, in a preferred embodiment of the invention.
Figure 10.- Shows a perspective view of the attachment means of the head to the movable carriage of a granule-based three-dimensional printing equipment, in a preferred embodiment of the invention.

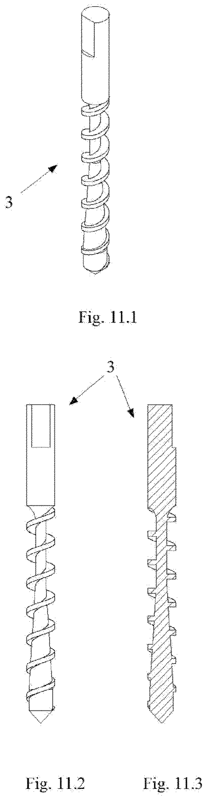

Figures 11.1, 11.2, and 11.3.- Show perspective, elevational and sectional views, respectively, of the extruder screw of a granule-based three-dimensional printing equipment, in a preferred embodiment of the invention.

### Detailed Description of a Preferred Embodiment Mode of the Invention

In view of the attached figures, it can be seen how in a preferred embodiment mode of the invention, the granule-based three-dimensional equipment herein proposed, has a three- dimensional printer (1) comprising control software and a granule-extruder head (2). The granules are granules of thermoplastic material.

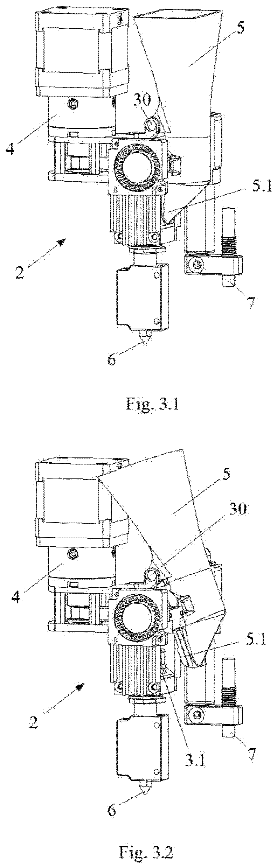

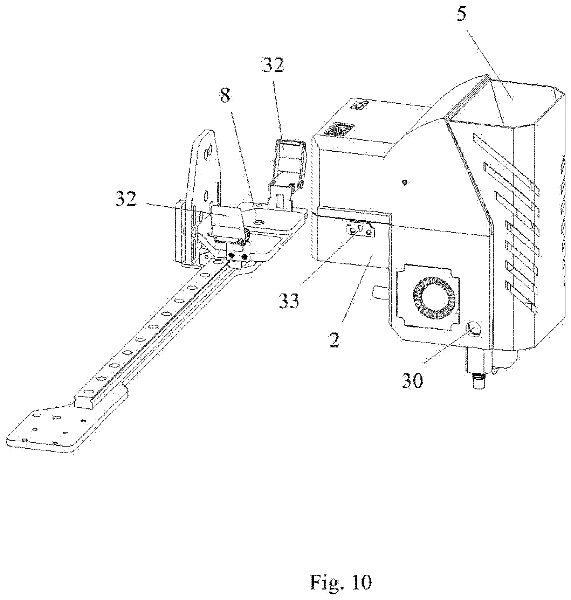

Said extruder head (2) comprises an extruder screw (3) therein, connected to a first motor (4) and to the software, so as to convey the granules from a filling reservoir (5) thereof to an outlet nozzle (6). Since it is arranged in the extruder head (2), with an end connected to the first motor (4) and with the opposite end to the nozzle (6), it is not visible in Figures 3.1 to 4.2, for example, but it is depicted in Figures 10.1 to 10.3.

The extruder screw (3) has a root diameter in the area through which the material is fed that is constant and smaller than in the area closest to the outlet end of the material following the extrusion, as shown in Figures 10.1 to 10.3, but the helix of the screw has a constant diameter and pitch throughout the entire length of the extruder screw (3). The cross-section between these two different and constant diameters changes gradually so as to prevent having a helix pitch that will cause the clogging of the material.

The extruder head (2) also has an inductive sensor (7) connected to the software and attached to the extruder head (2) in a first position such that it is located proximal to the nozzle (6) and at a first height equal to or significantly higher than that of said nozzle (6) and, a movable carriage (8) of the extruder head (2) connected to the software.

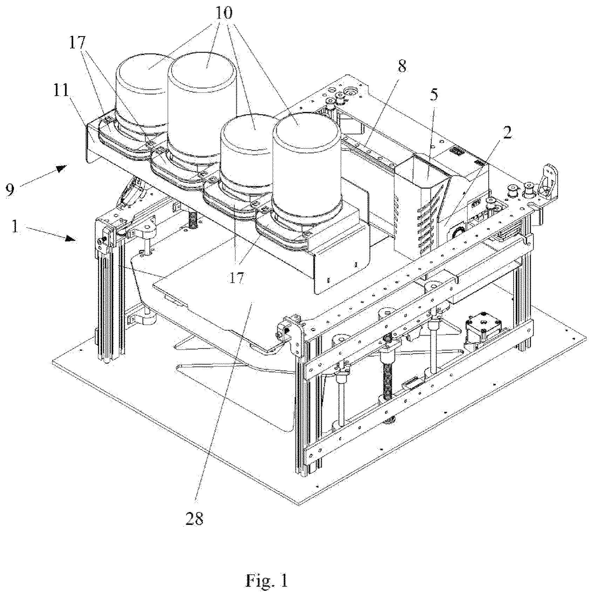

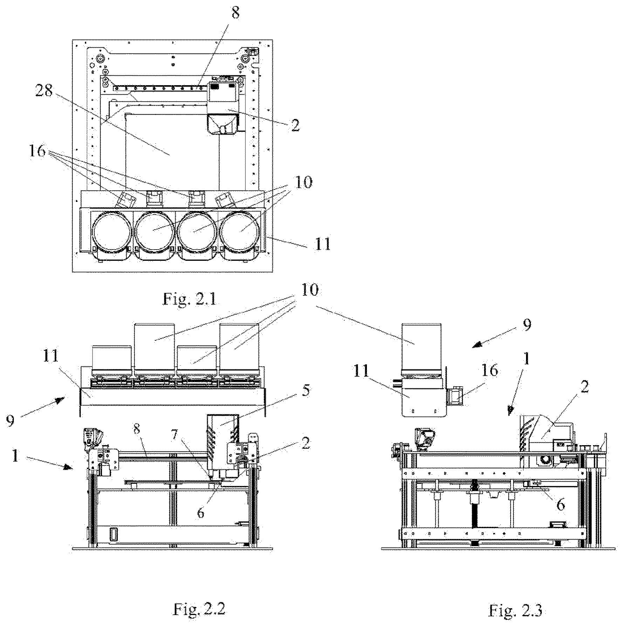

As shown in Figures 1 and 2.1 to 2.3, this equipment further comprises an automatic granule dispenser (9) for the feeding of the filling reservoir (5), which, in turn, comprises two or more containers (10), each one containing a type of granule.

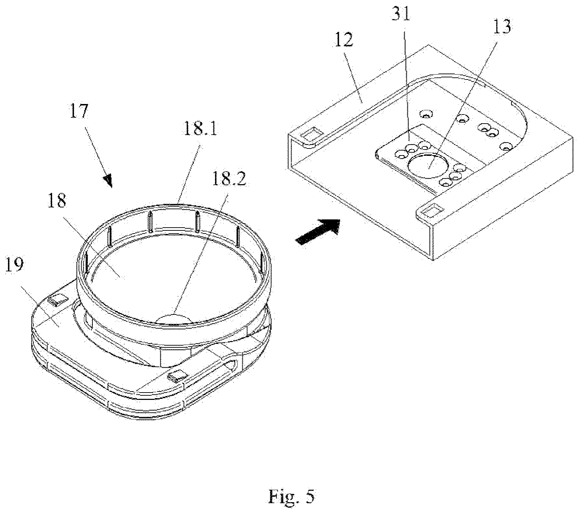

Likewise, the granule dispenser (9) has a supporting base (11) of the containers (10), which may be seen in Figures 1, 2.2, and 2.3, comprising an engagement area (12) for each one having a first hole (13) for the outflow of the granules of the corresponding container (10), as shown in Figure 5.

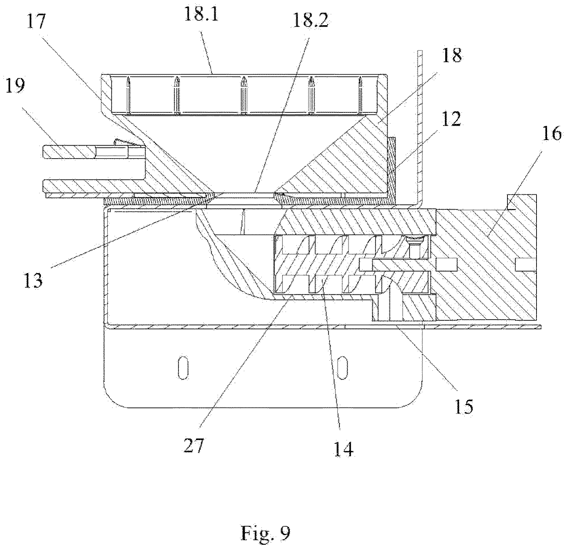

The granule dispenser (9) comprises a number of movable attachment means on each one of the containers (10) with respect to the supporting base (11), and a device for supplying granules to the filling reservoir (5) of the extruder head (2), respectively, for each container (10), comprising a conveyor screw (14) for the granules from the first hole (13) to the second outlet hole (15) located at a lower height than that of the first hole (13) and eccentric relative thereto, as shown in Figure 9.

In addition, the supplying device comprises a second motor (16) connected to the conveyor screw (14) and to the software.

In turn, this supporting base (11) is attached to the printer (1) at a height such that said second outlet holes (15) are located above the filling reservoir (5) of the extruder head (2).

In this preferred embodiment mode of the invention, the movable attachment means on each container (10) comprise a connection part (17) to the corresponding engagement area (12) on the supporting base (11).

Said connection part (17), as shown in Figure 5, has a first coupling area (18) to the container (10) with a hollow frustoconical shape with a cross-section that increases with height, having an upper opening (18.1) that has connection means to the lower end of the container (10) and a lower opening whose diameter is equal to or greater than that of the first hole (13), and a second area (19) liable to being assembled in the engagement area (12) of the supporting base (11), which is connected with the first coupling area (18) such that in an assembly position the lower opening (18.2) is located in register and centered relative to the first outlet hole (13) of the supporting base (11), as may be seen in Figure 9. This second area (19) aligns and retains the first coupling area (18) in position securely relative to the supporting base (11) and, in turn, prevents the granules from inadvertently spreading across the printer during the connection of the connection part (17) to the supporting base (11).

In addition, in this preferred embodiment mode of the invention, this connection part (17) comprises control means for the outflow of granules through the lower opening (18.2).

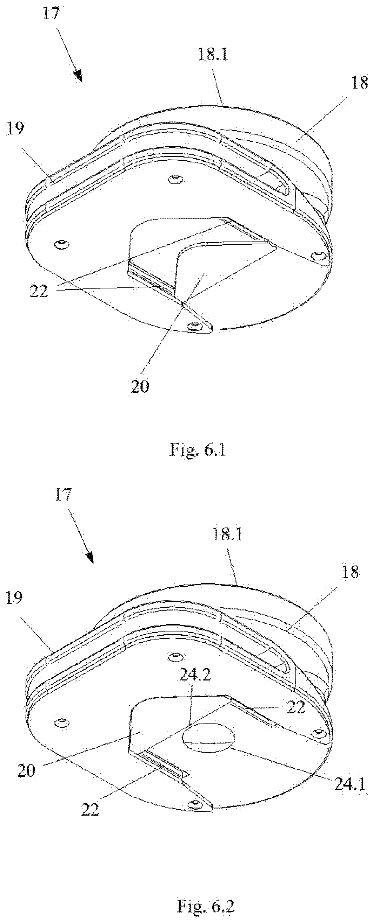

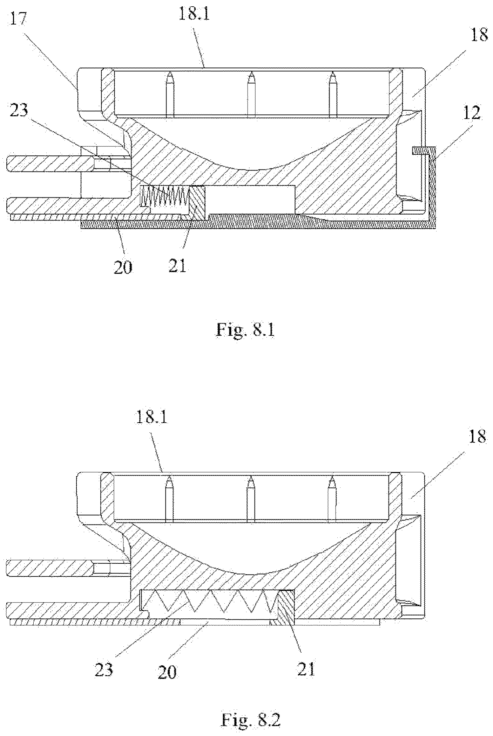

These control means, as may be seen in Figures 6.1, 6.2, 8.1, and 8.2, are formed by a hatch (20) located underneath the lower opening (18.2), having two fastening tabs (21) coupled to the inside of as many guides (22) arranged in the connection part (17), on both sides of said lower opening (18.2), the lower opening (18.2) having diametrically opposed first and second ends (24.1, 24.2), following the assembly direction, with the second end (24.2) facing more outwardly in the assembly position.

As shown in Figures 8.1 and 8.2, these control means likewise comprise a number of springs (23) located within the guides (22) and connected with the fastening tabs (21), such that in a uncoupled position of the connection part (17), they have an extended position as the one shown in Figure 8.1, that allows for the attachment of the hatch (20) in a closed position, as the one depicted in Figure 6.1, where the fastening tabs (21) are proximal to the first end (24.1) of the lower opening (18.2) and the hatch (20) is located in register with the lower opening (18.2).

The supporting base (11) comprises a portion (31) of each engagement area (12), emerging upwardly around the first outlet hole (13). This way, as shown in Figure 8.2, in the assembly position, it is liable to being in contact with the lower area of the fastening tabs (21) of the hatch (20), so that they allow the relative movement thereof with respect to the connection part (17) up to an open position of the hatch (20), depicted in Figure 6.2, wherein it is shifted relative to the lower opening (18.2), wherein the springs (23) are compressed such that they allow for the attachment of the fastening tabs (21) in a position more proximal to the second end (24.2) of said lower opening (18.2).

The relative shifting of the hatch (20) occurs when the projections of the engagement area (12) interfere with the lower area of the fastening tabs (21) from a specific point of the path of the connection part (17). This interference keeps the hatch (20) from continuing to shift together with the connection part (17) and it remains secured to the engagement area (12), the final result being that the hatch (20) adopts an open position.

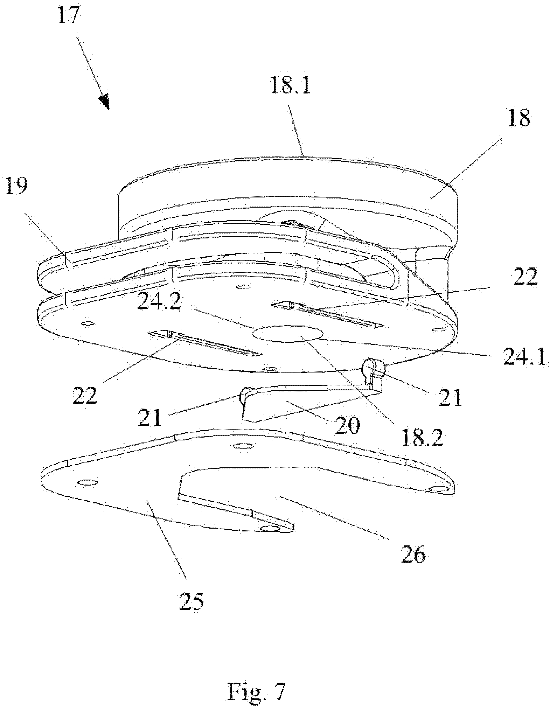

In addition, in this preferred embodiment mode of the invention, the control means for the outflow granules comprise a lid (25) of the lower side thereof, as shown in Figure 7, having a channel (26) for the shifting of the hatch (20) from its closed position to its open position.

According to another aspect, in this preferred embodiment mode, the conveyor screw (14) comprises a double-helix thread and is fitted in a passage (27) between the first hole (13) and the second hole (15), its length being such that the thread of both helixes is aligned with the inlet opening to the passage (27), as shown in Figure 9. This prevents the undesired spilling of granules.

The passage (27) has the function of restricting the granule amount and how the conveyor screw (14) is fed, this feeding being axial. In turn, the conveyor screw (14) is the element driving the movement and conveyance of the granules. Thanks to its double helix, it is capable of carrying out an enhanced collection and dumping thereof in a more controlled manner.

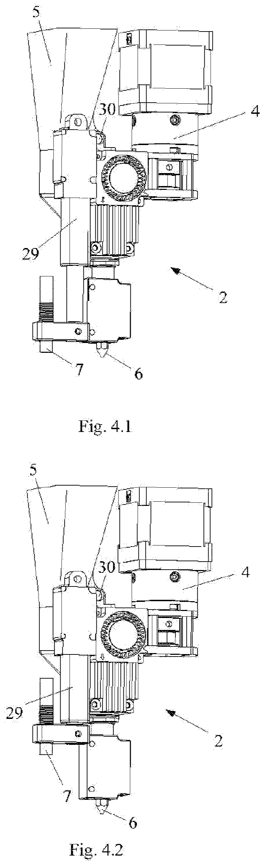

On the other hand, the equipment comprises a number of movement means of the inductive sensor (7) of the printer (1) connected to the control software, so that said sensor has a second position such that it is located at a second height greater than the first height, as shown in Figure 4.2.

This inductive sensor (7) allows measuring its distance to the printing surface (28). It is assembled at a preset distance from the nozzle (6) of the extruder through which the material generated by the fusion of the granules outflows. Knowing this distance between the nozzle (6) and the inductive sensor (7), the equipment may measure the correct distance from the nozzle (6) to the printing surface (28) without the user's intervention, as well as "mapping" the deviation of the printing surface measuring on several points thereof.

The movement means of the inductive sensor (7) allow positioning it with considerable repeatability at the necessary distance and location so that the equipment only carries out the calibration when it is required. Once the calibration of the inductive sensor (7) has concluded, it is moved to the second position outside the workspace, thus preventing damages thereto or interferences with the object that is to be manufactured.

In this preferred embodiment mode of the invention, the movement means of the inductive sensor (7) are formed by a linear actuator (29) that allows for the vertical movement of the inductive sensor (7), as can be seen in Figures 4.1 and 4.2, from a first position depicted in Figures 4.1, with the inductive sensor (7) proximal to the nozzle (6) and a second position, shown in Figure 4.2, wherein said sensor is in a second position at a greater height.

In other embodiment modes, these movement means may be formed by a rotating device with an axis such that it allows for the tilting of the inductive sensor (7) therearound.

According to another aspect, in this preferred embodiment mode of the invention, the filling reservoir (5) is connected to the extruder head (2) by means of a number of movable connection means arranged in the coupling areas therebetween, formed by the outlet mouth (5.1) of the filling reservoir (5) and the inlet mouth (3.1) to the extruder screw (3).

In this case, the movable connection means between the filling reservoir (5) and the extruder head (2) are formed by one or more magnets (not depicted in the figures) and, by a sheet material with magnetic properties, respectively arranged in one of the coupling areas therebetween.

Nevertheless, in other embodiment modes these movable connection means between the filling reservoir (5) and the extruder head (2) may be formed by one or more pull springs arranged between the coupling areas therebetween or by other types of means.

In the case in which the movable connection means are formed solely by the magnets and the sheet with magnetic properties, the filling reservoir (5) is fully removable relative to the extruder head (2). However, in this preferred embodiment mode, the movable connection means further comprise, a tilting axis (30) of the filling reservoir (5), whereby the filling reservoir (5) has a position connected to the extruder head (2), as shown in Figure 3.1, and an unconnected position thereof, wherein, as depicted in Figure 3.2, the filling reservoir (5) is tilted relative to said tilting axis (30) when a complete emptying thereof is required, without its full removal from the extruder head (2).

In other embodiment modes, the movable connection means may have, instead of the tilting axis (30), a number of sliding guides of the filling reservoir (5) liable to allowing for the relative movement of the filling reservoir (5) with respect to the extruder head (2).

In this preferred embodiment mode, the equipment comprises a granule presence sensor arranged in the outlet mouth (5.1) of the filling reservoir (5) and connected with the control software. This presence sensor is responsible for detecting if material is present or not in the filling reservoir (5) and prevents the operation of the equipment in case there is no material loaded therein.

Likewise, and whenever necessary based on the instructions given to the equipment, the granule presence sensor performs the task of "notifying" when loading material is necessary. This task implies working jointly with the automatic granule dispenser.

In this preferred embodiment mode of the invention, the granule presence sensor is formed by an infrared light beam with a detection distance that varies with the color of the object to be detected. For all practical purposes, it allows the equipment to know with enough precision if there is material loaded or not before and/or during the printing process. This allows controlling when it is necessary to load material in the filling reservoir (5), either before or during the printing, as well as preventing the equipment from working if no material is loaded.

30 In other embodiment modes, the granule presence sensor may be formed by a piezoelectric sensor or another sensor capable of detecting said granule presence in the outlet mouth (5.1) of the filling reservoir (5).

In this preferred embodiment mode of the invention, the axis of the first motor (4) is parallel to the extruder screw (3) as shown in Figures 3.1 to 4.2, such that there is a gap therebetween. In turn, the extruder screw (3) is connected to said first motor (4) by means of a transmission belt and a number of pulleys.

In addition, in this preferred embodiment mode, the equipment comprises a number of movable attachment means of the extruder head (2) to the movable carriage (8), which in this case are formed by at least two pull latches (32) or two lever locks located on the sides of the movable carriage (8) and wherein the extruder head (2) has as many latching mechanisms (33) liable to coupling with said pull latches (32) or lever locks, as shown in Figure 10.

These movable attachment means allow easily and quickly replacing the entire extruder head (2) in case it is necessary. This way, the user of the equipment has the possibility of continuing to work if, for example, the extruder head (2) becomes clogged, since, normally, spare parts are at hand.

With the pair of pull latches (32) or lever locks located on the sides of the carriage (8) it is possible to place and secure the extruder head (2) to the carriage (8) of the equipment safely and reliably. This way, with a small and simple lever movement in each of the latches (32) coupling and/or uncoupling the extruder head (2) of the equipment is quickly achieved.

According to another aspect, in other embodiment modes, the equipment may comprise a collection and routing device for the outflow of the granules from at least one container (10), from the outlet of the passage to a location situated on an area different from the printing surface (28). It may be formed, for instance, by a device collecting the granules from each pair of containers and rerouting its outflow to a point shifted relative to the printing area.

With this, if any granules were to remain after the outflow that could fall when the filling reservoir (5) has already been removed, they would not fall on the printing surface (28).

In this embodiment mode, the equipment further comprises a number of identification means of the granule containers (10) connected to the control software. These identification means are capable of knowing what type of granule is contained in each one of the connected containers (10). They also detect the amount contained in each container (10) and the extruder head (2) will directly move to the specific container (10) containing the granules it needs, identifying an infinity number of colors or materials and the position of any of these containers.

## Claims

1. Thermoplastic material granule-based three-dimensional printing equipment comprising a three-dimensional printer (1) executing control software and comprising a granule extruder head (2), which is supported on a carriage (8) configured to move the extruder head (2) and 5 controlled by the control software, wherein the extruder head (2) comprises:
an extruder screw (3) connected to a first motor (4) controlled by the control software, and configured to convey the granules from a granule filling reservoir (5) to an outlet nozzle (6);
an inductive sensor (7) in communication with the control software and attached to the extruder head (2) in a first position adjacent to the nozzle (6) and at a first height equal to or greater than the height at which the nozzle (6) is located; and
**characterized in that** it further comprises an automatic granule dispenser (9) for the feeding of the filling reservoir (5), which in turn comprises:
two or more containers (10), each for containing a type of granule;
a supporting base (11) for the containers (10) comprising an engagement area (12) for each of them having a first hole (13) for the outflow of the granules from the corresponding container (10);
a number of movable attachment means on each one of the containers (10) relative to the supporting base (11); and
a supplying device for each container (10) for supplying granules from said containers (10) to the filling reservoir (5) of the extruder head (2), each supplying device comprising a granule conveyor screw (14) connected to a second motor (16) controlled by the control software, and configured to convey the granules from the first hole (13) to a second outlet hole (15) located at a lower height to that of the first hole (13) and eccentric relative thereto, each second hole (15) being at a height greater than the height of the filling reservoir (5) of the extruder head (2).

2. The equipment according to claim 1, wherein the movable attachment means on each container (10) comprise a connection part (17) to the corresponding engagement area (12) on the supporting base (11), having a first coupling area (18) to the container (10) with a hollow frustoconical shape with a cross-section that increases with height, having an upper opening (18.1) which has connection means to the lower end of the container (10) and a lower opening (18.2) whose diameter is equal to or greater than that of the first hole (13) and, a second area (19) liable to being assembled in the engagement area (12) of the supporting base (11), which is connected with the first coupling area (18) such that, in an assembled position, the lower opening (18.1) thereof is located in register and centered relative to the first outlet hole (13) of the supporting base (11).

3. **The** equipment according to claim 2, wherein the connection part (17) comprises control means for the outflow of the granules through the lower opening (18.2) which comprise
a hatch (20) located underneath the lower opening (18.2), having two fastening tabs (21) coupled on the inside of as many guides (22) arranged in the connection part (17), on both sides of said lower opening (18.2), the lower opening (18.2) having diametrically opposed first and second ends (24.1, 24.2), following the assembly direction, with the second end (24.2) facing more outwardly in the assembly position; and
a number of springs (23) located on the inside of the guides (22) connected with the fastening tabs (21), such that in an uncoupled position of the connection part (17), have an extended position allowing for the attachment of the hatch (20) in a closed position, with the fastening tabs (21) proximal to the first end (24.1) of the lower opening (18.2) and the hatch (20) located in register with the lower opening (18.2);
wherein the supporting base (11) comprises a portion (31) in each engagement area (12), emerging upwardly around the first outlet hole (13), such that in the assembly position it is liable to being in contact with the lower area of the fastening tabs (21) of the hatch (20) in such a way that it will allow for the relative movement thereof with respect to the connection part (17) up to an open position of the hatch (20) shifted relative to the lower opening (18.2), wherein the springs (23) are compressed such that they allow the attachment of the fastening tabs (21) in a position more proximal to the second end (24.2) of said lower opening (18.2).

4. **The** equipment according to claim 3, wherein the control means for the outflow of granules comprise a lid (25) on the lower side thereof, having a channel (26) for the shifting of the hatch (20) from its closed position to its open position.

5. The equipment according to any of the previous claims, wherein the conveyor screw (14) comprises a double-helix thread and is fitted in a passage (27) between the first hole (13) and the second hole (15), its length being such that the thread of both helixes is aligned with the inlet opening to the passage (27).

6. The equipment according to any of the previous claims, comprising a number of movement means of the inductive sensor (7) of the printer (1) connected to the control software, configured to move the inductive sensor (7) to a second position wherein the inductive sensor (7) is at a second height greater than the first height.

7. The equipment according to claim 6, wherein the movement means of the inductive sensor (7) are formed by a linear actuator (29) allowing for the vertical movement of the inductive sensor (7).

8. The equipment according to claim 6, wherein the movement means of the inductive sensor (7) are formed by a rotating device with an axis such that it allows for the tilting of the inductive sensor (7) therearound.

9. The equipment according to any of the previous claims, wherein the filling reservoir (5) is connected to the extruder head (2) by means of a number of movable connection means arranged in the coupling areas therebetween, formed by the outlet mouth (5.1) of the filling reservoir (5) and the inlet mouth (3.1) to the extruder screw (3).

10. The equipment according to claim 9, wherein the movable connection means between the filling reservoir (5) and the extruder head (2) are formed by one or more magnets and, by a sheet material with magnetic properties, respectively arranged in one of the coupling areas therebetween.

11. The equipment according to claim 9, wherein the movable connection means between the filling reservoir (5) and the extruder head (2) are formed by one or more pull springs arranged between the coupling areas therebetween.

12. The equipment according to any of claims 9 and 10 or 11, wherein the movable connection means comprise a tilting axis (30) of the filling reservoir (5).

13. The equipment according to any of claims 9 and 10 or 11, wherein the movable connection means comprise a number of sliding guides of the filling reservoir (5), liable to allowing for the relative movement of the filling reservoir (5) with respect to the extruder head (2).

14. The equipment according to any of the previous claims, comprising a granule presence sensor arranged in the outlet mouth (5.1) of the filling reservoir (5) and connected with the control software.

15. The equipment according to claim 14, wherein the granule presence sensor is a sensor formed by an infrared light beam.

16. The equipment according to claim 14, wherein the granule presence sensor is formed by a piezoelectric sensor.

17. The equipment according to any of the previous claims, comprising a collection and routing device for the outflow of the granules from at least one container (10), from the outlet of the passage (27) to a location situated on an area different from the printing surface (28).

18. The equipment according to any of the previous claims, wherein the axis of the first motor (4) is located parallel to the extruder screw (3) such that a gap exists therebetween, and wherein the extruder screw (3) is connected to said first motor (4) by means of a transmission belt and a number of pulleys.

19. The equipment according to any of the previous claims, comprising a number of movable attachment means of the extruder head (2) to the movable carriage (8).

20. The equipment according to claim 19, wherein the movable attachment means are formed by at least two pull latches or two lever locks located on the sides of the movable carriage (8) and wherein the extruder head (2) has as many latching mechanisms liable to coupling with said pull latches or lever locks.

21. The equipment according to any of the previous claims, comprising a number of identification means of granule containers (10) connected to the control software.
